# EUROPEAN PATENT SPECIFICATION

(11) **EP 4 313 749 B1**
(45) Date of publication and mention of the grant of the patent: **11.02.2026**
(21) Application number: 22725412.5
(22) Date of filing: 25.04.2022
(51) Int. Cl.: B63B 1/38

(54) **SYSTEM AND METHOD FOR REDUCING DRAG ON A MARINE VESSEL**
SYSTEM UND VERFAHREN ZUR VERRINGERUNG DES LUFTWIDERSTANDS AUF EINEM WASSERFAHRZEUG
SYSTÈME ET PROCÉDÉ DE RÉDUCTION DE RÉSISTANCE À L'AVANCEMENT D'UN NAVIRE MARIN

(30) Priority: 28.04.2021 GB 202106034
(43) Date of publication of application: 07.02.2024
(73) Proprietor: Armada Technologies Limited, Bangor Down BT20 5HR (GB)
(72) Inventor: ARMSON, Roger, Bangor (GB)
(74) Representative: Yeadon IP Limited
(86) International application number: PCT/EP2022/060825
(87) International publication number: WO 2022/229054

(56) References cited:
- WO-A1-2016/137755
- JP-A- 2001 239 994
- KR-A- 20150 111 429
- US-A- 3 288 100
- US-A1- 2010 236 466
- US-A1- 2011 259 257
- US-B2- 10 315 729
- US-B2- 9 545 978

## Description

### FIELD OF THE INVENTION

This invention relates to a system and method for reducing drag on a marine vessel by air lubrication, and in particular to a system and method for providing an air lubricating layer between the hull of a marine vessel and the water flowing under the hull as the vessel is moving through the water in order to reduce drag (friction) and thereby reduce the energy required to drive the vessel through the water, resulting in fuel savings and more economic propulsion.

### BACKGROUND OF THE INVENTION

International shipping is a large and growing source of greenhouse gas emissions. Maritime transport emits around 940 million tonnes of CO₂ annually and is responsible for about 2.5% of global greenhouse gas (GHG) emissions. Furthermore, these emissions are projected to increase significantly unless action is urgently taken to improve the efficiency of merchant shipping. From 1 January 2018, large ships over 5000 gross tonnage loading or unloading cargo or passengers at ports in the European Economic Area (EEA) are to monitor and report their related CO2 emissions and other relevant information.

Water is a viscous medium which results in hulls of ships propelled through water experiencing shear viscous drag forces. The forces have a magnitude which increases as the hulls of the ships are propelled faster through water. It is known to reduce such drag forces by interposing air bubbles between the exterior of the hull of a marine vessel and the body of water that the vessel is moving through. The resistance between the resulting layer of air bubbles and water is less than for direct contact between the hull and water and a significant reduction in viscous drag forces acting upon the hull can be achieved.

In one known system, disclosed in EP 2 817 208, EP 2 915 735, EP 2 915 736, EP 3 290 324 and EP 3 290 325, an air cavity is provided in a flat region of the hull of the vessel into which cavity air is supplied so that air is mixed into the sea water as it flows over the cavity. The air within the cavity is generally supplied by a compressor. The problem with this known system is that it works on a passive shearing effect and therefore is intrinsically coupled with and limited by the speed of the vessel through the water. The faster the speed the greater the shearing effect and the greater the air injection rate. This causes the system to have a minimum operable speed of around 9knots, causing it to be unsuitable for many vessel types. Furthermore, there is a lack of control of bubble properties due to the nature of the shearing effect. The system is also unable to operate on side walls of the vessel hull.

Other known systems, such as that disclosed in GB 2 505 281, KR20170031425, KR20180000968, and KR20200055517, incorporate a nozzle at the hull water interface, through which compressed air is 'injected' under pressure. Due to the motion of the ship, in six degrees of freedom, the instantaneous hydrostatic pressure at each individual nozzle location is continuously changing. It is deemed impossible to accurately predict the motion of the ship (or more specifically the corresponding instantaneous depth of each nozzle) and therefore ensure optimal compressed air delivery via exact hydrostatic pressure match. The result is that there is, at any instantaneous point in time, an over-pressurized or under-pressurized delivery of air at each injection nozzle. As a result compressed air is either under supplied in the under- pressurized case or undergoes a high pressure expulsion in the over-pressurized case. This leads to either an under-lubrication effect or excess air injection where some undetermined proportion of the delivered microbubbles are lost to the sea rather than entrained within the flat of bottom boundary layer.

Other known systems, such as the ones disclosed in US2010/236466, WO2016/137755, JP2001239994, KR20150111429, US3288100, US2011/259257, US10315729, US9545978, disclose marine vessels comprising a hull and a system for reducing drag on the hull of the marine vessel. The document WO2016/137755 discloses the preamble of claims 1 and 10.

### SUMMARY OF THE INVENTION

According to a first aspect of the present invention there is provided a marine vessel according to claim 1.

The vessel may further comprise for selectively supplying additional air to at least one of one or more of said at least one air inlets of the at least one venturi tube or to the flow of water upstream or downstream of the air inlets of the at least one venturi.

The air compressing arrangement may comprise at least one air compressor, such as a variable frequency drive screw compressor.

At least part of said additional air may be in the form of bubbles and more preferably nano-scale bubbles, mixed into said flow of water upstream or downstream of the air inlets of the at least one venturi.

In one embodiment the system may comprise a plurality of said venturi tubes, each venturi tube supplying a respective one of or a respective group of said outlets.

The at least one water pump may be associated with a respective sea chest within the hull communicating with a water inlet communicating with the water surrounding the vessel. Alternatively the at least one water pump may comprise an existing pump provided in the vessel, such as a ballast pump, cooling pump, fire pump or jockey pump.

The at least one ambient air inlet port is preferably located above the level of the water within which the vessel floats.

Preferably the controller is programmed to regulate the flow rate of water supplied from the at least one water pump to the at least one venturi tube as a function of the speed of the vessel through the water. The controller may be further programmed to regulate the flow rate of water supplied from the at least one water pump to the at least one venturi tube as a function of the draught of the vessel and/or as a function of hydrostatic back pressure on the at least one water pump. One or more sensors may be provided for determining the flow rate of one or more of the flow rate of water supplied to the at least one venturi tube from the at least one water inlet; the flow rate of water supplied to the at least one venturi tube from the at least one water pump; the flow rate of air supplied to the at least one venturi tube from the at least one ambient air inlet port; the flow rate of air and water supplied from the at least one venturi tube to the plurality of outlets in the hull of the vessel; the hydrostatic back pressure on the at least one water pump, said one or more sensors providing input to the controller.

According to a further aspect of the present invention there is provide a method of reducing drag on a marine vessel according to claim 10.

The method may further comprise the steps of selectively supplying additional air to one or more of one or more of said at least one air inlets of the at least one venturi tube, or to the flow of water upstream or downstream of the at least one venturi.

At least part of said additional air may be in the form of bubbles and more preferably nano-scale bubbles, mixed into said flow of water upstream or downstream of the air inlets of the at least one venturi.

The flow rate of water supplied from the at least one water pump to the at least one venturi tube is preferably regulated as a function of the speed of the vessel through the water. The flow rate of air supplied to the at least one venturi tube from the air compressing arrangement may be regulated as a function of the speed of the vessel through the water. The flow rate of water supplied from the at least one water pump to the at least one venturi tube may be further regulated as a function of the draught of the vessel and/or the hydrostatic back pressure on the at least one water pump.

The flow rate of water supplied from the at least one water pump to the at least one venturi tube may be regulated as a function of one or more of the flow rate of water supplied to the at least one venturi tube from the at least one water inlet; the flow rate of water supplied to the at least one venturi tube from the at least one water pump; the flow rate of air supplied to the at least one venturi tube from the at least one ambient air inlet port; the flow rate of air and water supplied from the at least one venturi tube to the plurality of outlets in the hull of the vessel; the hydrostatic back pressure on the at least one water pump, as measure by suitable sensors.

### BRIEF DESCRIPTION OF THE DRAWINGS

A system for reducing drag on a marine vessel by air lubrication in accordance with an embodiment of the present invention will now be described, by way of example only, with reference to the accompanying drawings, in which:

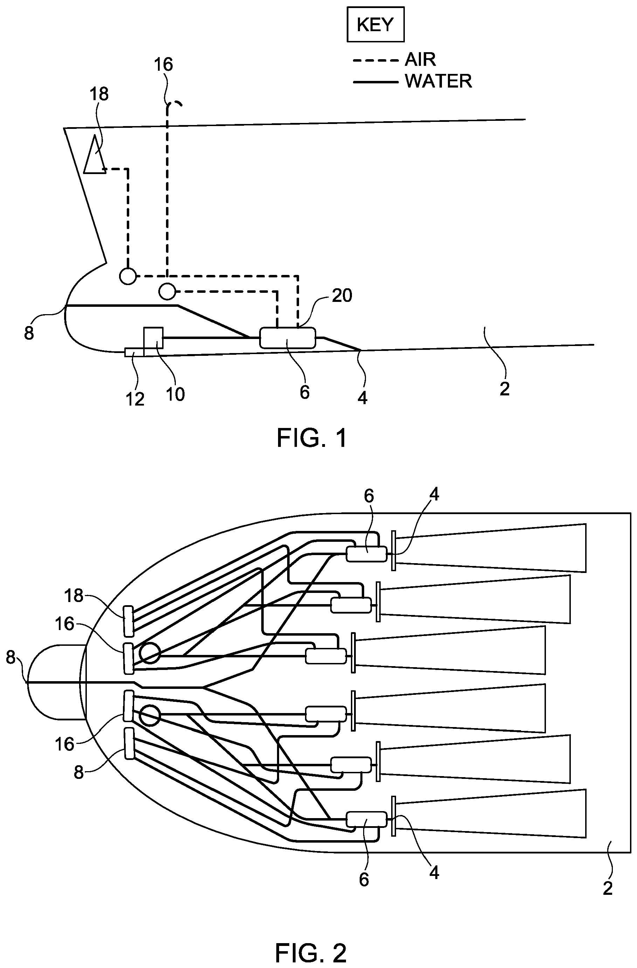

Figure 1 is a schematic side view of a ship incorporating a system for reducing drag on a marine vessel by air lubrication in accordance with an embodimnt of the present invention;
Figure 2 is a schematic plan view of the system of Figure 1; and

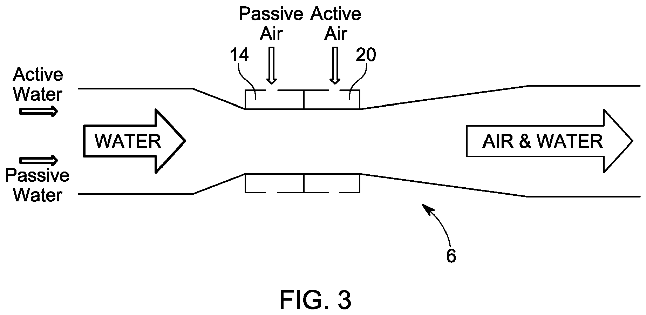

Figure 3 is a detailed view of a venturi tube of the system of Figure 1.

### DETAILED DESCRIPTION OF THE DRAWINGS

A system for reducing drag on a marine vessel 2 by air lubrication, as illustrated in the drawings, controls the injection of bubbles of air into the boundary layer of at least a portion of the submerged hull of the vessel. A plurality of outlets 4 are provided in the hull of the vessel for injecting bubbles of air into the boundary layer, the bubbles spreading aft of the hull towards the stern to cover a majority of the submerged surface of the hull, thereby providing a significant reduction in viscous drag forces acting upon the hull of the vessel.

The present invention provides a system which can control the size of the bubbles and volume of air injected into the vessel boundary layer via said plurality of outlets 4 for the purposes of air lubrication. This is achieved by injecting air into water in a system of piping internal to the vessel using a plurality of venturi tubes 6 to entrain air into a flow of water with control of the flow rate of both air and water to the venturi tubes 6. This provides a greater level of control over the injection of air bubbles into the boundary layer and allows the utilisation of the flow round the vessel to reduce power requirements. The injection of a precisely controlled air/water mix into the boundary layer will also avoid the development of turbulence and reduce bubble dispersion on the bottom of the hull (and potentially on the side walls).

In the embodiment shown in the drawings a series of venturi tubes 6 (for example six) are provided, each supplying an individual outlet or group of outlets 4 in the hull of the vessel 2. A single venturi tube 6 may be used or multiple venturi tubes of any number to suit the size of the vessel and/or the number of outlets 4 provided in the hull of the vessel.

Water is supplied to each venturi tube 6 firstly from a passive water inlet 8 placed in the vessel's bow such that water enters the water inlet as the vessel moves through the water. Secondly water is selectively pumped through each venturi tube via one or more water pumps 10, whereby the flow rate of water into each venturi tube 6 can be controlled by controlling the operation of the or each water pump 10.

In the embodiment shown in the drawings, two water pumps 10 are provided, each supplying water to a group of venturi tubes 6 from a respective sea chest 12 located in the hull of the vessel 2 with an inlet for receiving water from outside of the hull of the vessel. Alternatively it is envisaged that an existing ballast/cooling/fire/Jockey jump may be used to supply water to the venturi tubes 6, such pumps typically being situated in an engine room of the vessel 2.

Air entrained into the water flowing through each venturi tube 6 is supplied to the respective venturi tube 6, preferably to respective air inlets 14 located in the throat of each venturi tube, from an ambient air port 16 communicating with the atmosphere (for example located on the outer deck of the vessel).

Further air may also be supplied into each venturi tube 6 or into the water flow upstream or downstream of each venturi tube.

In one embodiment at least a portion of said further air may comprise bubbles, more preferably nano-scale bubbles, produced by means of a suitable bubble generator and introduced into the flow of water upstream or downstream of said ambient air inlets 14 of each venturi tube. Nano-scale bubbles may reduce slime growth within the system and also on the wetted surface areas of the exterior of the hull of the vessel.

According to the invention, at least a portion of said further air comprises compressed air from a source of compressed air, such as a compressor 18, preferably via a second set of air inlets 20 in each venturi tube 6. Said second set of air inlets 20 may comprise an annular air injection nozzle located in the throat of each venturi tube 6 (or in a diverging section of the venture tube downstream of the throat or at any other location upstream or downstream of the throat) for supplying air into the respective venturi tube 6 from the source of compressed air.

A control system is provided to control the water and air supply to each venturi tube 6 to create the optimum size and flow rate of bubbles into the boundary layer of the vessel 2 via a plurality of outlets 4 located in the submerged portion of the vessel's hull.

The combined effect of the active and passive elements of the system allows for precise control over the outputs (air bubbles) and reduced energy requirements compared to the current best in class systems. The system of passive and active water and air/bubble supply to the venturi tubes permits optimisation of the flow rate of bubbles into the boundary layer of the vessel 2 irrespective of the operating conditions, in particular speed, of the vessel 2.

Air is injected into the or each venturi tube both passively (due to the pressure drop developed within the venturi tube) and actively (through the supply of compressed air from an air compressor and/or from a bubble generator) via the control system to adjust the air delivery (speed and pressure) to match the prevailing operating conditions through the injection nozzles.

Passive air bubble injection size (due to the pressure drop developed in the venturi tube) is governed by the flow speed through each venturi tube 6. Active control over this flow speed through the use of a water pump 10 to control the flow rate of seawater through the respective venturi tube 6 allows for control of the passive air injection conditions. The control of the water flow rate through the venturi tubes 6 allows for injection of the air/water mix into the boundary layer at the correct speed, therefore reducing boundary layer turbulence and reducing bubble dispersion.

The passive water inlet 8 is preferably located near a stagnation point on the vessel's bow. Water ("System Water") enters through this inlet as the vessel moves through the water.

As needed, to provide optimal performance, the or each seawater pump 10 adds water supplementally to each venturi tube 6, creating an eductor effect. The eductor effect creates a suction to boost or maintain the water flow through the system and overcomes frictional losses and backpressure created by the venturi tubes 6. The additional water provided by the or each water pump 10 supplements the passive water ingested at the passive water inlet, and careful control of the pump speed ensures the precise speed and quantity of water and air to exit the vessel via the outlets 4 at the bottom and side-walls of the hull.

The combined system water (PASSIVE inlet + ACTIVE pumped), passes through each venturi tube 6. As the two flows of water converge upstream of the venturi tubes 6, the total flow rate of water increases. This flow rate increase results in a local drop in pressure (Bernoulli's Law). The converging inlet section of each venturi tube may be designed (proportioned) to maintain a pressure drop below atmospheric pressure, resulting in a net suction effect. Ambient air is drawn through into the ambient air port 16, preferably from water and/or deck level, and is entrained into the water flowing through each venturi tube 6 as bubbles of air.

The size of the air bubbles is governed by the flow rate of water through each venturi tube 6. The internal shape of each venturi tube itself, in particular the cross sectional area of the throat region thereof, therefore provides a 'rough' control mechanism over the properties of the bubbles created. It is envisaged that a variable size venturi, with an adjustable throat area, may be provided to facilitate control of the air bubbles.

An annular air injection nozzle assembly 20 is provided for supplying air from a compressor having a plurality of air injection nozzles therein. The air injection nozzles of the air injection nozzle assembly 20 may be located within the throat section of the respective venturi tube, immediately downstream of the ambient air inlets 14. The compressor 18 may comprise a Variable Frequency Drive (VFD) screw compressor which may be used to generate compressed air at the precise pressure and volumetric flow rate required to ensure optimal air lubrication for the specific vessel operating condition, i.e. minimizing net energy usage.

The shape and design of the injection nozzles in the air injection nozzle assembly 20 may be adapted to allow precise control (homogenization) of the bubbles injected into the flow of water passing through each venturi tube 6.

A sensor based automated control system may be provided, governing the interaction of the physical components based on the prevailing operating condition of the vessel, in particular the speed of the vessel, to ensure optimal outputs and reduce energy usage. The control system may be developed with machine learning capability to allow for continuous optimisation.

The control system may be programmed to automatically customise the PASSIVE ambient air incoming to each venturi tube and to supplement the PASSIVE air volume with additional ACTIVE air from the compressor, as well as controlling the flow rate of water through each venturi by controlling the operation of the water pumps, to maintain a precise control over the air and water mixture being generated by the venturi tubes. The controller may receive inputs from various sensors, such as a vessel speed sensor, air flow meters determining the air flow rate from the ambient air inlet port 16, a pressure sensor determining the ambient air pressure, air pressure and/or flow rate from the compressor 18 and/or water flow meters determining the water flow from the passive water inlet 8 and from the water pumps 10 (and/or pump speed sensors), and/or pressure sensors to determine the hydrostatic back pressure on the water pumps 10. The controller may also receive information from sensors to determine the draught of the vessel, for example so that the system can compensate for the load carried by the vessel. The controller may be programmed to control the flow rate of water and also preferably air supplied to each venturi tube as a function of the information received from these various sensors to provide optimum operation of the system over a broad range of prevailing operating conditions of the vessel, and in particular to control the flow rate of water and also preferably air supplied to each venturi tube as a function of the speed of the vessel.

Depending on i) the localised water flow speed at the outlets 4 and ii) the hydrostatic back pressure on the water pumps 10, the water pumps 10 may have to work harder to overcome the pressure at the outlets 4 and therefore the energy 'demand' of the water pumps 10 will increase with vessel draught. The speed of the vessel through the water is preferably the predominant determinant for the speed of operation of the water pumps 10. However, the draught of the vessel in the water may have secondary influences that adapts the required outflow from the water pumps 10. The pumps 10 may be designed to deliver a higher or lower flow rate/speed to overcome more/ less pressure at the outlets 4. In short pump speed, mass flow rate, pressure and injection speed are all intrinsically linked.

To avoid turbulence at the point of injection, it is desirable to target an outlet injection speed equal to the speed of the flow in the boundary layer at the point of injection (locations of the outlets 4 in the hull). The water pumps 10 are adapted and controlled to ensure zero relative flow difference between the injected system water and the sea water passing over the outlets 4. The factors that affect the speed of the flow in the boundary layer at the point of injection - and therefore the demand on the water pump(s) - are as follows:
1. Vessel forward speed (speed through the water) - which may be picked up from a vessel bridge reading;
2. The position of the outlets 4 in the hull - known through design/ installation and CFD analysis;
3. Draught may also play a part in local flow speeds - which may be picked up with echosounder and/or draught gauges;
4. Fouling of the internal pipelines which increases back pressure on the system/water pumps - which may be picked up with pressure gauges;

The outlets 4 in the hull deliver the air and water mixture into the hydrodynamic boundary layer at the bottom and on side walls of the vessel. The outlets may be adapted to minimise the turbulence of the flow and ensure a reliable stream into the boundary layer.

A surfactant may be added to the water, upstream or downstream of the venturi tubes, in order to facilitate bubble formation at the outlets 4 in the hull of the vessel. The system provides continuous air lubrication of the bottom and sides of the ship, so that resistance through water is reduced. The control system may be programmed to automatically optimise the interaction between the PASSIVE and ACTIVE water and air supplied to each venturi tube to ensure the total ship energy usage is minimized and enables the tailoring of the 'recipe' of air water mixture supplied from the outlets. This may enable 3D control of system output regardless of operating condition/ speed/ ship type. Therefore, air output/volume is decoupled from ship speed.

By controlling water flow speed through each venturi tube 6 it is possible to control the shear stress at the point of injection. This allows the reliable control of the size of the air bubbles generated. Simplistically, the smaller the bubble, the greater the surface area to volume ratio of that bubble and therefore the greater the lubricity per unit of air volume produced. This improves the net performance of the system as compared to competing systems.

By entraining air into water inboard of the vessel it is possible to deliver air bubbles through outlets in the sides of the hull in addition to the bottom to lubricate the sides of the hull, effectively doubling the area available for lubrication

The passive nature of the venturi tubes allows the production of at least a proportion of the air bubbles produced by the system with nil energy input, using only the passive supplies of water and air from the passive water inlet and ambient air inlet port respectively, providing a net performance increase of the system relative to prior art fully active systems (for example where all of the air is supplied from compressors), while the active supplies of water and air, from the water pumps and compressor respectively greatly increase the performance and flexibility of the system over prior art entirely passive systems.

The system and method in accordance with the present invention may be applied to any water borne vessel, such as merchant shipping, ferries, leisure craft, inland waterway vessels and any other vessel adapted to move through water.

The invention is not limited to the embodiments described herein but can be amended or modified without departing from the scope of the present invention as defined by the appended claims.

## Claims

1. A marine vessel (2) comprising a hull and a system for reducing drag on the hull of the marine vessel comprising:
a plurality of outlets (4) provided in a normally submerged region of the hull of the vessel for delivering an air and water mixture into a boundary layer of the vessel;
at least one venturi tube (6) having a converging inlet region, a diverging outlet region and a throat between said converging inlet region and diverging outlet region, at least one air inlet being provided in or downstream of said throat, the outlet region communicating with one or more of said plurality of outlets;
at least one water inlet (8) located in a bow region of the vessel adapted to supply water into the inlet region of the at least one venturi tube as the vessel moves through the water;
at least one water pump (10) adapted to supply water to the inlet region of the at least one venturi tube;
at least one ambient air inlet port (16) adapted to supply ambient air to one or more of said at least one air inlets of the at least one venturi tube such that air from said at least one ambient air inlet port is entrained into water flowing through the at least one venturi tube to deliver air bubbles to one or more of said plurality of outlets;
**characterised in that** the system further comprises:
an air compressing arrangement (18) for compressing air to generate compressed air and for selectively supplying compressed air to one or more of said at least one air inlets of the at least one venturi tube;
a controller adapted to regulate the flow rate of water supplied from the at least one water pump to the at least one venturi tube and to regulate the supply of compressed air to the at least one air inlets of the at least one venturi tube from the air compressing arrangement to control the delivery of the air and water mixture through the plurality of outlets, and thereby optimise drag reduction of the vessel.

2. A vessel as claimed in claim 1, comprising a plurality of said venturi tubes, each venturi tube supplying a respective one of or a respective group of said outlets.

3. A vessel as claimed in any preceding claim, wherein said at least one water pump is associated with a respective sea chest within the hull communicating with an inlet receiving water from outside of the hull.

4. A vessel as claimed in claim 2, wherein said at least one water pump comprises an existing pump provided in the vessel, and optionally the existing pump is a ballast pump, cooling pump, fire pump or jockey pump.

5. A vessel as claimed in any preceding claim, wherein the at least one ambient air inlet port is located above the water level and/or above a deck of the vessel.

6. A vessel as claimed in any preceding claim, wherein the air compressing arrangement comprises at least one air compressor.

7. A vessel as claimed in claim 6, wherein the at least one compressor comprises a variable frequency drive screw compressor.

8. A vessel as claimed in any preceding claim, wherein the controller is programmed to regulate the flow rate of water supplied from the at least one water pump to the at least one venturi tube and/or to regulate the supply of compressed air to the at least one venturi tube from the air compressing arrangement as a function of the speed of the vessel through the water.

9. A vessel as claimed in any preceding claim, wherein one or more sensors are provided for determining one or more of : the flow rate of water supplied to the at least one venturi tube from the at least one water inlet; the flow rate of water supplied to the at least one venturi tube from the at least one water pump and/or the speed of the pump; the flow rate of air supplied to the at least one venturi tube from the at least one ambient air inlet port; the flow rate of air supplied to the at least one venturi tube from the air compressing arrangement; the flow rate of air and water supplied from the at least one venturi tube to the plurality of outlets in the hull of the vessel; the hydrostatic back pressure on the at least one water pump, said one or more sensors providing input to the controller.

10. A method of reducing drag on a hull of a marine vessel (2) comprising:
providing a plurality of outlets (4) in a normally submerged region of the hull of the vessel;
providing at least one venturi tube (6) having a converging inlet region, a diverging outlet region and a throat between said converging inlet region and diverging outlet region, at least one air inlet being provided in or downstream of said throat, the outlet region communicating with one or more of said plurality of outlets;
supplying water from at least one water inlet (8) located in a bow region of the vessel into the inlet region of the at least one venturi tube as the vessel moves through the water;
pumping water by means of at least one water pump (10) to the inlet region of the or each at least one venturi tube such that the flow of water through the at least one venturi tube entrains ambient air from at least one ambient air inlet port through at least one or more of said at least one air inlets of the at least one venturi tube;
**characterised in that** the method further comprises:
compressing air to generate compressed air and selectively supplying compressed air to one or more of said at least one air inlets of the at least one venturi tube;
regulating the flow rate of water supplied to the at least one venturi tube by means of said at least one water pump and regulating the supply of compressed air to the at least one air inlets of the at least one venturi tube to control the delivery of an air and water mixture through the plurality of outlets in the hull into a boundary layer of the vessel and thereby optimise drag reduction of the vessel.

11. A method as claimed in claim 10, wherein the flow rate of water supplied from the at least one water pump to the at least one venturi tube is regulated as a function of the speed of the vessel through the water.

12. A method as claimed in claim 11, wherein the flow rate of air supplied to the at least one venturi tube from the air compressing arrangement is regulated as a function of the speed of the vessel through the water.

13. A method as claimed in any one of claims 10 to 12, wherein the flow rate of water supplied from the at least one water pump to the at least one venturi tube and/or the supply of compressed air to the at least one venturi tube from the air compressing arrangement is regulated as a function of one or more of the flow rate of water supplied to the at least one venturi tube from the at least one water inlet; the flow rate of water supplied to the at least one venturi tube from the at least one water pump; the flow rate of air supplied to the at least one venturi tube from the at least one ambient air inlet port; the flow rate of air supplied to the at least one venturi tube from the air compressing arrangement; the flow rate of air and water supplied from the at least one venturi tube to the plurality of outlets in the hull of the vessel; the hydrostatic back pressure on the at least one water pump.

## Patentansprüche

1. Seeschiff (2), umfassend einen Rumpf und ein System zum Verringern des Strömungswiderstands des Rumps des Seeschiffs, umfassend:
eine Vielzahl von Auslässen (4), die in einem normalerweise unter Wasser befindlichen Bereich des Rumpfs des bereitgestellt sind, zum Liefern eines Gemischs aus Luft und Wasser in eine Grenzschicht des Schiffs;
mindestens ein Venturirohr (6), mit einem zusammenlaufenden Einlassbereich, einem auseinanderlaufenden Auslassbereich und einer Verengung zwischen dem zusammenlaufenden Einlassbereich und dem auseinanderlaufenden Auslassbereich, wobei mindestens ein Lufteinlass in der Verengung oder stromabwärts derselben bereitgestellt ist, wobei der Auslassbereich mit einem oder mehreren der Vielzahl von Auslässen in Verbindung steht;
mindestens einen Wassereinlass (8), der sich in einem Bugbereich des Schiffs befindet und dazu angepasst ist, Wasser in den Einlassbereich des mindestens einen Venturirohrs zuzuführen, wenn sich das Schiff durch das Wasser bewegt;
mindestens eine Wasserpumpe (10), die dazu angepasst ist, dem Einlassbereich des mindestens einen Venturirohrs Wasser zuzuführen;
mindestens eine Umgebungslufteinlassöffnung (16), die dazu angepasst ist, einem oder mehreren des mindestens einen Lufteinlasses des mindestens einen Venturirohrs Umgebungsluft zuzuführen, sodass Luft von der mindestens einen Umgebungslufteinlassöffnung in durch das mindestens eine Venturirohr strömendem Wasser mitgerissen wird, um einem der mehreren der Vielzahl von Auslässen Luftblasen zu liefern;
**dadurch gekennzeichnet, dass** das System ferner Folgendes umfasst:
eine Luftverdichtungsanordnung (18) zum Verdichten von Luft, um Druckluft zu erzeugen und zum selektiven Zuführen von Druckluft zu einem oder mehreren des mindestens einen Lufteinlasses des mindestens einen Venturirohrs;
eine Steuerung, die dazu angepasst ist, den Durchfluss von Wasser, das von der mindestens einen Wasserpumpe her dem mindestens einen Venturirohr zugeführt wird, zu regulieren und die Zufuhr von Druckluft zu dem mindestens einen Lufteinlass des mindestens einen Venturirohrs von der Luftverdichtungsanordnung her zu regulieren, um die Lieferung des Gemischs aus Luft und Wasser durch die Vielzahl von Auslässen hindurch zu steuern und dadurch die Strömungswiderstandsverringerung des Schiffs zu optimieren.

2. Schiff nach Anspruch 1, umfassend eine Vielzahl der Venturirohre, wobei jedes Venturirohr einen jeweiligen einen oder eine jeweilige Gruppe der Auslässe versorgt.

3. Schiff nach einem der vorangehenden Ansprüche, wobei die mindestens eine Wasserpumpe mit einem jeweiligen Seekasten in dem Rumpf assoziiert ist, der mit einem Wasser von außerhalb des Rumps aufnehmenden Einlass in Verbindung steht.

4. Schiff nach Anspruch 2, wobei die mindestens eine Wasserpumpe eine in dem Schiff bereitgestellte vorhandene Pumpe umfasst und wobei es sich optional bei der vorhandenen Pumpe um eine Ballastpumpe, eine Kühlpumpe, eine Brandlöschpumpe oder eine Druckhaltepumpe handelt.

5. Schiff nach einem der vorangehenden Ansprüche, wobei sich die mindestens eine Umgebungslufteinlassöffnung über dem Wasserspiegel und/über einem Deck des Schiffs befindet.

6. Schiff nach einem der vorangehenden Ansprüche, wobei die Luftverdichtungsanordnung mindestens einen Luftverdichter umfasst.

7. Schiff nach Anspruch 6, wobei der mindestens eine Verdichter einen Schraubendverdichter mit variabler Frequenz umfasst.

8. Schiff nach einem der vorangehenden Ansprüche, wobei die Steuerung dazu programmiert ist, den Durchfluss von Wasser, das von der mindestens einem Wasserpumpe her dem mindestens einen Venturirohr zugeführt wird zu regulieren und/oder die Zufuhr von Druckluft zu dem mindestens einen Venturirohr von der Luftverdichtungsanordnung her als Funktion der Geschwindigkeit des Schiffs durch das Wasser zu regulieren.

9. Schiff nach einem der vorangehenden Ansprüche, wobei ein oder mehrere Sensoren zum Bestimmen von einem oder mehreren der Folgenden bereitgestellt sind:
dem Durchfluss von Wasser, das dem mindestens einen Venturirohr von dem mindestens einen Wassereinlass her zugeführt wird; dem Durchfluss von Wasser, das dem mindestens einen Venturirohr von der mindestens einen Wasserpumpe her zugeführt wird, und/oder der Drehzahl der Pumpe; dem Durchfluss von Luft, die dem mindestens einen Venturirohr von der mindestens einen Umgebungslufteinlassöffnung her zugeführt wird, dem Durchfluss von Luft, die dem mindestens einen Venturirohr von der Luftverdichtungsanordnung her zugeführt wird; dem Durchfluss von Luft und Wasser, die von dem mindestens einen Venturirohr her der Vielzahl von Auslässen in dem Rumpf des Schiffs zugeführt werden; dem hydrostatischen Gegendruck an der mindestens einen Wasserpumpe, wobei der eine oder die mehreren Sensor Eingaben für die Steuerung bereitstellen.

10. Verfahren zum Verringern des Strömungswiderstands eines Rumpfs eines Seeschiffs (2), umfassend:
Bereitstellen einer Vielzahl von Auslässen (4) in einem normalerweise unter Wasser befindlichen Bereich des Rumpfs des Schiffs;
Bereitstellen mindestens eines Venturirohrs (6) mit einem zusammenlaufenden Einlassbereich, einem auseinanderlaufenden Auslassbereich und einer Verengung zwischen dem zusammenlaufenden Einlassbereich und dem auseinanderlaufenden Auslassbereich, wobei mindestens ein Lufteinlass in der Verengung oder stromabwärts derselben bereitgestellt ist, wobei der Auslassbereich mit einem oder mehreren der Auslässe in Verbindung steht;
Zuführen von Wasser von mindestens einen Wassereinlass (8), der sich in einem Bugbereich des Schiffs befindet, her in den Einlassbereich des mindestens einen Venturirohrs, wenn sich das Schiff durch das Wasser bewegt;
Pumpen von Wasser mittels mindestens einer Wasserpumpe (10) zu dem Einlassbereich des oder jedes mindestens einen Venturirohrs, sodass der Strom von Wasser durch das mindestens eine Venturirohr hindurch Umgebungsluft von mindestens einer Umgebungslufteinlassöffnung her durch mindestens einen oder mehrere des mindestens einen Lufteinlasses des mindestens einen Venturirohrs hindurch mitreißt;
**dadurch gekennzeichnet, dass** das Verfahren ferner Folgendes umfasst:
Verdichten von Luft, um Druckluft zu erzeugen, und selektives Zuführen von Druckluft zu einem oder mehreren des mindestens einen Lufteinlasses des mindestens einen Venturirohrs;
Regulieren des Durchflusses von Wasser, das dem mindesten einen Venturirohr mittels der mindestens einen Wasserpumpe zugeführt wird, und Regulieren der Zufuhr von Druckluft zu dem mindestens einen Lufteinlass des mindestens einen Venturirohrs, um die Lieferung eines Gemischs aus Luft und Wasser durch die Vielzahl von Auslässen in dem Rumpf hindurch in eine Grenzschicht des Schiffs zu steuern und dadurch die Strömungswiderstandsverringerung des Schiffs zu optimieren.

11. Verfahren nach Anspruch 10, wobei der Durchfluss von Wasser, das von der mindestens einen Wasserpumpe her dem mindestens einen Venturirohr zugeführt wird, als Funktion der Geschwindigkeit des Schiffs durch das Wasser reguliert wird.

12. Verfahren nach Anspruch 11, wobei der Durchfluss von Luft, die dem mindestens einen Venturirohr von der Luftverdichtungsanordnung her zugeführt wird, als Funktion der Geschwindigkeit des Schiffs durch das Wasser reguliert wird.

13. Verfahren nach einem der Ansprüche 10 bis 12, wobei der Durchfluss von Wasser, das von der mindestens einen Wasserpumpe her dem mindestens einen Venturirohr zugeführt wird, und/oder die Zufuhr von Druckluft zu dem mindestens einen Venturirohr von der Luftverdichtungsanordnung her als Funktion von einem der mehreren der Folgenden reguliert werden: dem Durchfluss von Wasser, das dem mindestens einen Venturirohr von dem mindestens einen Wassereinlass her zugeführt wird; dem Durchfluss von Wasser, das dem mindestens einen Venturirohr von der mindestens einen Wasserpumpe her zugeführt wird, dem Durchfluss von Luft, die dem mindestens einen Venturirohr von der mindestens einen Umgebungslufteinlassöffnung her zugeführt wird; dem Durchfluss von Luft, die dem mindestens einen Venturirohr von der Luftverdichtungsanordnung her zugeführt wird; dem Durchfluss von Luft und Wasser, die von dem mindestens einen Venturirohr her der Vielzahl von Auslössen in dem Rumpf des Schiffs zugeführt werden; dem hydrostatischen Gegendruck an der mindestens eine Wasserpumpe.

## Revendications

1. Navire marin (2) comprenant une coque et un système de réduction de la traînée sur la coque du navire marin comprenant :
une pluralité de sorties (4) définies dans une région normalement immergée de la coque du navire pour distribuer un mélange d'air et d'eau dans une couche limite du navire ;
au moins un tube de venturi (6) comportant une région d'entrée convergente, une région de sortie divergente et un col entre lesdites région d'entrée convergente et région de sortie divergente, au moins une entrée d'air étant définie dans ledit col ou en aval de celui-ci, la région de sortie communiquant avec une ou plusieurs de ladite pluralité de sorties ;
au moins une entrée d'eau (8) située dans une région de proue du navire, propre à alimenter en eau la région d'entrée de l'au moins un tube de venturi tandis que le navire se déplace à travers l'eau ;
au moins une pompe à eau (10) propre à alimenter en eau la région d'entrée de l'au moins un tube de venturi ;
au moins un orifice d'entrée d'air ambiant (16) propre à alimenter en air ambiant ladite entrée ou une ou plusieurs desdites entrées d'air de l'au moins un tube de venturi de telle sorte que l'air arrivant par ledit au moins un orifice d'entrée d'air ambiant soit entraîné dans l'eau s'écoulant à travers l'au moins un tube de venturi pour distribuer des bulles d'air à une ou plusieurs de ladite pluralité de sorties ;
**caractérisé en ce que** le système comprend en outre :
un système de compression d'air (18) pour comprimer de l'air afin de générer de l'air comprimé et pour alimenter en air comprimé de manière sélective ladite entrée ou une ou plusieurs desdites entrées d'air de l'au moins un tube de venturi ;
un dispositif de commande propre à réguler le débit de l'eau avec laquelle l'au moins un tube de venturi est alimenté depuis l'au moins une pompe à eau et à réguler l'alimentation en air comprimé de l'au moins une entrée d'air de l'au moins un tube de venturi depuis le système de compression d'air afin de commander la distribution du mélange d'air et d'eau à travers la pluralité de sorties, et d'optimiser ainsi la réduction de la traînée du navire.

2. Navire selon la revendication 1, comprenant une pluralité desdits tubes de venturi, chaque tube de venturi alimentant une sortie respective ou un groupe de sorties respectif parmi lesdites sorties.

3. Navire selon l'une quelconque des revendications précédentes, dans lequel ladite au moins une pompe à eau est associée à une prise d'eau à la mer respective à l'intérieur de la coque communiquant avec une entrée recevant de l'eau de l'extérieur de la coque.

4. Navire selon la revendication 2, dans lequel ladite au moins une pompe à eau comprend une pompe existante présente dans le navire et, éventuellement, la pompe existante est une pompe de ballast, une pompe de refroidissement, une pompe à incendie ou une pompe d'appoint.

5. Navire selon l'une quelconque des revendications précédentes, dans lequel l'au moins un orifice d'entrée d'air ambiant est situé au-dessus du niveau de l'eau et/ou au-dessus d'un pont du navire.

6. Navire selon l'une quelconque des revendications précédentes, dans lequel le système de compression d'air comprend au moins un compresseur d'air.

7. Navire selon la revendication 6, dans lequel l'au moins un compresseur comprend un compresseur à vis à variateur de fréquence.

8. Navire selon l'une quelconque des revendications précédentes, dans lequel le dispositif de commande est programmé pour réguler le débit de l'eau avec laquelle l'au moins un tube de venturi est alimenté depuis l'au moins une pompe à eau et/ou pour réguler l'alimentation en air comprimé de l'au moins un tube de venturi depuis le système de compression d'air en fonction de la vitesse du navire à travers l'eau.

9. Navire selon l'une quelconque des revendications précédentes, dans lequel un ou plusieurs capteurs sont mis en place pour déterminer un(e) ou plusieurs : du débit de l'eau avec laquelle l'au moins un tube de venturi est alimenté depuis l'au moins une entrée d'eau ; du débit de l'eau avec laquelle l'au moins un tube de venturi est alimenté depuis l'au moins une pompe à eau et/ou de la vitesse de la pompe ; du débit de l'air avec lequel l'au moins un tube de venturi est alimenté depuis l'au moins un orifice d'entrée d'air ambiant ; du débit de l'air avec lequel l'au moins un tube de venturi est alimenté depuis le système de compression d'air ; du débit de l'air et de l'eau avec lesquels la pluralité de sorties dans la coque du navire sont alimentées depuis l'au moins un tube de venturi ; de la contre-pression hydrostatique sur l'au moins une pompe à eau, ledit ou lesdits capteurs fournissant une entrée au dispositif de commande.

10. Procédé de réduction de la traînée sur une coque d'un navire marin (2) comprenant :
définir une pluralité de sorties (4) dans une région normalement immergée de la coque du navire ;
mettre en place au moins un tube de venturi (6) comportant une région d'entrée convergente, une région de sortie divergente et un col entre lesdites région d'entrée convergente et région de sortie divergente, au moins une entrée d'air étant définie dans ledit col ou en aval de celui-ci, la région de sortie communiquant avec une ou plusieurs de ladite pluralité de sorties ;
alimenter en eau la région d'entrée de l'au moins un tube de venturi depuis au moins une entrée d'eau (8) située dans une région de proue du navire, tandis que le navire se déplace à travers l'eau ;
pomper de l'eau au moyen d'au moins une pompe à eau (10) vers la région d'entrée du ou de chaque tube de venturi de telle sorte que l'écoulement d'eau à travers l'au moins un tube de venturi entraîne de l'air ambiant provenant d'au moins un orifice d'entrée d'air ambiant à travers ladite entrée ou au moins une ou plusieurs desdites entrées d'air de l'au moins un tube de venturi ;
**caractérisé en ce que** le procédé comprend en outre :
comprimer de l'air afin de générer de l'air comprimé et alimenter en air comprimé de manière sélective ladite entrée ou une ou plusieurs desdites entrées d'air de l'au moins un tube de venturi ;
réguler le débit de l'eau avec laquelle l'au moins un tube de venturi est alimenté au moyen de ladite au moins une pompe à eau et réguler l'alimentation en air comprimé de l'au moins une entrée d'air de l'au moins un tube de venturi afin de commander la distribution d'un mélange d'air et d'eau, à travers la pluralité de sorties dans la coque, dans une couche limite du navire, et d'optimiser ainsi la réduction de la traînée du navire.

11. Procédé selon la revendication 10, dans lequel le débit de l'eau avec laquelle l'au moins un tube de venturi est alimenté depuis l'au moins une pompe à eau est régulé en fonction de la vitesse du navire à travers l'eau.

12. Procédé selon la revendication 11, dans lequel le débit de l'air avec lequel l'au moins un tube de venturi est alimenté depuis le système de compression d'air est régulé en fonction de la vitesse du navire à travers l'eau.

13. Procédé selon l'une quelconque des revendications 10 à 12, dans lequel le débit de l'eau avec laquelle l'au moins un tube de venturi est alimenté depuis l'au moins une pompe à eau et/ou l'alimentation en air comprimé de l'au moins un tube de venturi depuis le système de compression d'air sont régulés en fonction d'un(e) ou de plusieurs du débit de l'eau avec laquelle l'au moins un tube de venturi est alimenté depuis l'au moins une entrée d'eau ; du débit de l'eau avec laquelle l'au moins un tube de venturi est alimenté depuis l'au moins une pompe à eau ; du débit de l'air avec lequel l'au moins un tube de venturi est alimenté depuis l'au moins un orifice d'entrée d'air ambiant ; du débit de l'air avec lequel l'au moins un tube de venturi est alimenté depuis le système de compression d'air ; du débit de l'air et de l'eau avec lesquels la pluralité de sorties dans la coque du navire sont alimentées depuis l'au moins un tube de venturi ; de la contre-pression hydrostatique sur l'au moins une pompe à eau.
